# EUROPEAN PATENT APPLICATION

(11) **EP 3 805 041 A1**
(43) Date of publication of application: **14.04.2021**
(21) Application number: 19810461.4
(22) Date of filing: 22.02.2019
(51) Int. Cl.: B60M 7/00, B60L 50/40, B60L 50/50, B60L 53/00, B60L 55/00, B60L 58/00, H02J 7/00

(54) **VEHICLE POWER FEEDING DEVICE**

(30) Priority: 31.05.2018 JP 2018105162
(71) Applicant: Kawasaki Jukogyo Kabushiki Kaisha, Hyogo 650-8670 (JP)
(72) Inventor: MUNETO, Koji, Hyogo 650-8670 (JP); KITAMURA, Shinji, Hyogo 650-8670 (JP); YOSHIDA Terumasa, Hyogo 650-8670 (JP); TAKAGI, Akinori, Hyogo 650-8670 (JP)
(74) Representative: Witte, Weller & Partner Patentanwälte mbB
(86) International application number: PCT/JP2019/006765
(87) International publication number: WO 2019/230078

(57) **Abstract**

A vehicle power supplying apparatus capable of reducing a possibility of malfunction due to an object on the ground being an obstacle, is provided. One example of the vehicle power supplying apparatus of the present disclosure includes a linear-motion device (1) including a linear-motion member (11) elongated in a front-and-rear direction and configured to linearly move the linear-motion member (11) in the front-and-rear direction within a given range between a reference position and a given forward position, a swinging device (2) including a swinging member (21) attached at a base-end part to a front-end part of the linear-motion member (11) so as to be swingable in a left-and-right direction, and configured to swing the swinging member (21) in the left-and-right direction, a lifting device (3) attached to a tip-end part of the swinging member (21) and configured to raise and lower a power supplying part (4) configured to supply power to a power receiving part attached to a lower surface of a vehicle by being connected to the power receiving part, and a controller configured to control the linear-motion device (1), the swinging device (2), and the lifting device (3) based on positional information on the power receiving part so as to connect the power supplying part (4) to the power receiving part.

## Description

### TECHNICAL FIELD

The present disclosure relates to a vehicle power supplying apparatus which charges a battery mounted on a vehicle.

### BACKGROUND ART

In recent years, charging devices which automatically charge a battery mounted on a vehicle such as an electric automobile while the vehicle stops in a parking lot etc., are proposed (e.g., Patent Document 1).

Patent Document 1 discloses an automatic charger which charges by automatically docking a power supplying unit with a power receiving unit provided to a lower surface of a vehicle. Patent Document 1 discloses in drawings a configuration including a rod which moves linearly, a lifter provided to a tip-end part of the rod to raise and lower the power supplying unit, and a boom (arm) accommodating the rod and horizontally swingable on the ground.

### [Reference Document of Conventional Art]

### [Patent Document]

[Patent Document 1] JP3201018U

### DESCRIPTION OF THE DISCLOSURE

### [Problems to be Solved by the Disclosure]

According to the configuration of Patent Document 1, for example, the boom accommodating the rod horizontally swings on the ground centering on a base-end part of the boom so that its tip-end part is oriented toward the power receiving unit of the vehicle. After that, the rod is linearly moved so that its tip-end part is located below the power receiving unit. Then, the power supplying unit is raised by the lifter provided at the tip-end part of the rod so as to be docked with the power receiving unit.

In this case, the elongated rod is accommodated in the boom, and the boom must swing on the ground so that the moving direction of the rod is oriented toward the power receiving unit. An area where the boom accommodating the elongated rod swings (moves) on the ground, is large. Therefore, if an object (e.g., a stone and a trash) exists on the ground, the object may become an obstacle, which may increase a possibility of malfunction and breakdown of the charger.

The present disclosure is made in view of solving the problems described above, and one purpose thereof is to provide a vehicle power supplying apparatus, capable of reducing a possibility of malfunction due to an object on the ground being an obstacle.

### [Summary of the Disclosure]

In order to achieve the purpose described above, a vehicle power supplying apparatus according to one aspect of the present disclosure includes a linear-motion device including a linear-motion member elongated in a front-and-rear direction and configured to linearly move the linear-motion member in the front-and-rear direction within a given range between a reference position and a given forward position, a swinging device including a swinging member attached at a base-end part to a front-end part of the linear-motion member so as to be swingable in a left-and-right direction, and configured to swing the swinging member in the left-and-right direction, a lifting device attached to a tip-end part of the swinging member and configured to raise and lower a power supplying part configured to supply power to a power receiving part attached to a lower surface of a vehicle by being connected to the power receiving part, and a controller configured to control the linear-motion device, the swinging device, and the lifting device based on positional information on the power receiving part so as to connect the power supplying part to the power receiving part.

According to this configuration, when connecting the power supplying part to the power receiving part of the vehicle, after the linear-motion member is advanced, the swinging member is swung so that the power supplying part is located below the power receiving part, and the power supplying part is raised by the lifting device to be connected to the power receiving part. Therefore, an area where the apparatus moves on the ground can be comparatively small, combining an area where the linear-motion member and the swinging member linearly move, and a small area where the swinging member swings to the left or right. Thus, the possibility of malfunction due to an object on the ground being an obstacle can be reduced. Moreover, since the swinging member can be shorter and lighter than that of the linear-motion member, energy required for swinging the swinging member can be small, and thus, a reduction in the energy consumption can also be expected

The lifting device may include a foldable lifting mechanism part attached at a base-end part to the tip-end part of the swinging member and attached at a tip-end part to the power supplying part. The swinging device may include a recess in a tip-end side area of the swinging member, the recess accommodating the lifting mechanism part when the lifting mechanism part is folded. The vehicle power supplying apparatus may further include an accommodating case in which the linear-motion member, the swinging member, the lifting mechanism part, and the power supplying part are accommodated, when the lifting mechanism part is folded and accommodated in the recess, a longitudinal direction of the swinging member matches the front-and-rear direction of the linear-motion member, and the linear-motion member is at the reference position.

According to this structure, the lifting mechanism part is accommodated in the accommodating case by being folded and accommodated in the recess of the swinging member. Therefore, the apparatus can be reduced in size.

The lifting mechanism part may include first parallel linkage mechanisms each having a first link member constituting a driving link rotatably supported at one end by the tip-end part of the swinging member, and rotatably attached at the other end to a coupling part, and a second link member constituting a driven link, and second parallel linkage mechanisms each having a third link member constituting a driving link rotatably attached at one end to the coupling part, and rotatably attached at the other end to a member to which the power supplying part is attached, and a fourth link member constituting a driven link. The coupling part may be always located closer, compared to the one ends of the first and second link members and the other ends of the third and fourth link members, to a base end of the swinging member, and the third link member rotates interlocking with a rotation of the first link member or the second link member so as to rotate in the opposite direction from the rotation of the first link member or the second link member.

### [Effect of the Disclosure]

The present disclosure provides the configuration described above, and achieves an effect of providing the vehicle power supplying apparatus, capable of reducing the possibility of malfunction due to the object on the ground being the obstacle.

### BRIEF DESCRIPTION OF DRAWINGS

Fig. 1 is a plan view illustrating a setting example of a vehicle power supplying apparatus of the present disclosure.
Fig. 2(A) is a plan view of a power supplying unit of the vehicle power supplying apparatus illustrated in Fig. 1 at a certain operational position, and Fig. 2(B) is a side view of the power supplying unit.
Fig. 3 is a perspective view illustrating one example of a detailed configuration of a lifting device.
Fig. 4 is a block diagram of an outline configuration of the vehicle power supplying apparatus and a vehicle illustrated in Fig. 1.
Figs. 5(A) to 5(C) are perspective views respectively illustrating one example of operation of the vehicle power supplying apparatus of the present disclosure.

### MODE FOR CARRYING OUT THE DISCLOSURE

Hereinafter, a preferred embodiment is described with reference to the drawings. Note that the same reference characters are given to the same or corresponding components throughout the drawings to omit redundant description. Moreover, the present disclosure is not limited to the embodiment described below.

### (Embodiment)

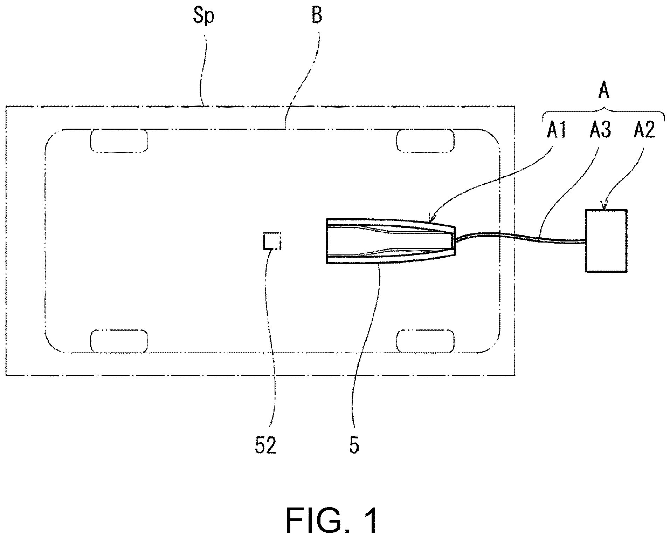

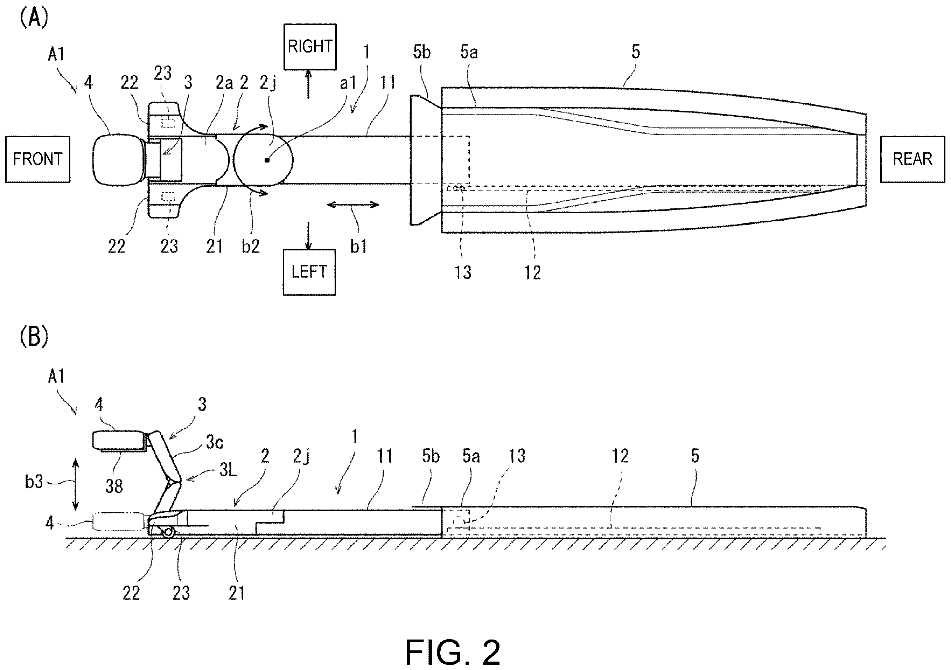

Fig. 1 is a plan view illustrating a setting example of a vehicle power supplying apparatus of the present disclosure. Moreover, Fig. 2(A) is a plan view of a power supplying unit of the vehicle power supplying apparatus illustrated in Fig. 1 at a certain operational position, and Fig. 2(B) is a side view of the power supplying unit.

As illustrated in Fig. 1, a vehicle power supplying apparatus A includes a power supplying unit A1 and a control box A2. The power supplying unit A1 and the control box A2 are connected with each other via a cable A3 including a power supplying wire and a signal wire.

An accommodating case 5 of the power supplying unit A1 is fixed at a given position on the ground below a vehicle B which is parked at a parking space Sp. The accommodating case 5 is designed to have a height so as not to contact with a lower surface (bottom surface) of the vehicle B. The vehicle B is a vehicle such as an electric automobile, which is driven by power, as energy, supplied from a battery mounted on the vehicle B. A power receiving part 52 is provided to the lower surface of the vehicle B.

Below, the power supplying unit A1 is described by setting a front-and-rear direction and a left-and-right direction as illustrated in Fig. 2(A), for example.

As illustrated in Figs. 2(A) and 2(B), the power supplying unit A1 includes a linear-motion device 1, a swinging device 2, a lifting device 3, a power supplying part 4, and the accommodating case 5 which accommodates these components. The accommodating case 5 is comprised of a case body 5a and a lid 5b. The lid 5b is attached to an end part of an upper surface of the case body 5a, for example, with a hinge so as to be openable and closable.

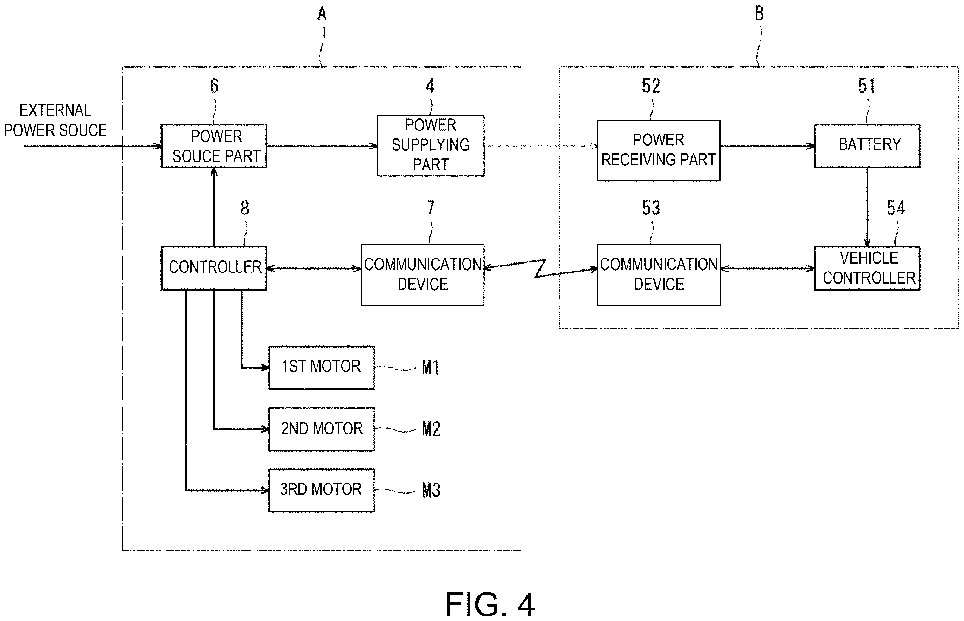

The linear-motion device 1 includes a linear-motion member 11 disposed horizontally and having a substantially rectangular shape elongated in the front-and-rear direction, a linear-motion mechanism for linearly moving the linear-motion member 11 in the front-and-rear direction (longitudinal direction), and a first motor M1 which drives the linear-motion mechanism (see Fig. 4). The linear-motion mechanism is a rack and pinion mechanism, for example. A rack 12 and a pinion 13 are illustrated as one example of this case. In this case, the rack 12 is fixed to an inner bottom surface of the case body 5a, and the first motor M1 for rotating the pinion 13 is fixed around a base end of the linear-motion member 11. By rotating the first motor M1 in clockwise and counterclockwise directions, the linear-motion member 11 can be advanced and retreated as indicated by an arrow b1. Note that, here, one example of a principle of the rack and pinion mechanism is described, and arrangement, etc., of the rack 12 and the pinion 13 can be changed. For example, the rack and pinion mechanism may be provided to both left and right sides, and two pinions on the respective sides may be rotated by the single first motor M1. Moreover, a guiding rail for guiding the linear motion of the linear-motion member 11 may be provided. Note that the linear-motion mechanism is not limited to the rack and pinion mechanism.

The swinging device 2 includes a swinging member 21 of which a base-end part is overlapped with and attached to a tip-end part of the linear-motion member 11 so as to be swingable in the left-and-right direction (horizontal direction), a rotary mechanism (a rotary joint 2j), caster attaching parts 22 provided to the tip-end side of the swinging member 21 on the left and right, respectively, and casters 23 attached to the respective left and right caster attaching parts 22.

The rotary mechanism which swings the swinging member 21 in the left-and-right direction is provided to the base-and part of the swinging member 21, and this rotary mechanism may be comprised of the rotary joint 2j which is used for an industrial robot, etc. For example, the rotary joint 2j may be configured so that a gear attached to a joint rotation shaft centering on a rotational axial line a1 extending vertically, meshes with a gear attached to a motor shaft of a second motor M2 (see Fig. 4). Then, by rotating the second motor M2 in the clockwise and counterclockwise directions, the swinging member 21 can swing centering on the rotational axial line a1 as indicated by an arrow b2.

The casters 23 are changeable of their directions. The casters 23 change their directions and rotate according to the linear motion of the linear-motion member 11 and the swinging of the swinging member 21, and support the linear-motion member 11 and the swinging member 21 which go outside the accommodating case 5 so as not to contact with the ground. Therefore, the casters 23 can allow the linear motion and the swinging to be performed smoothly.

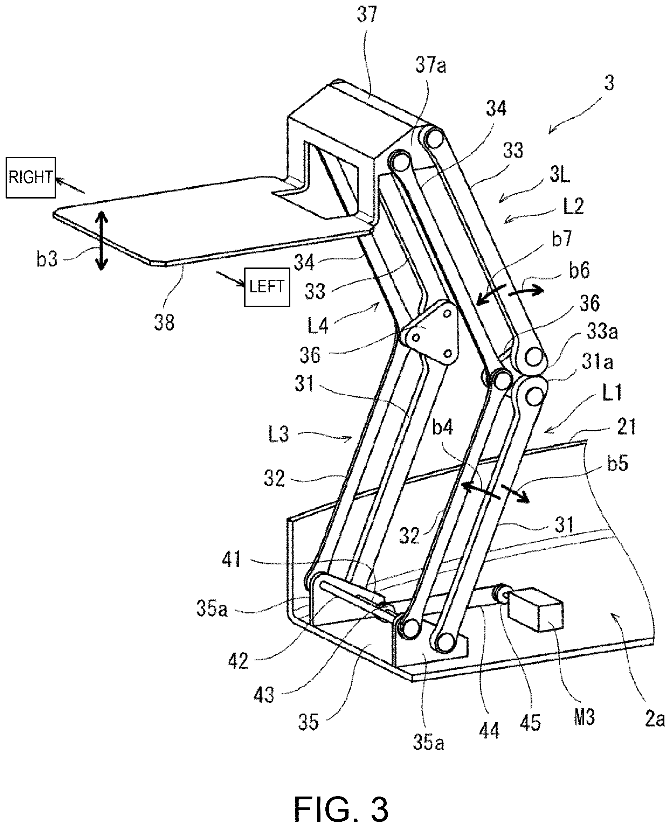

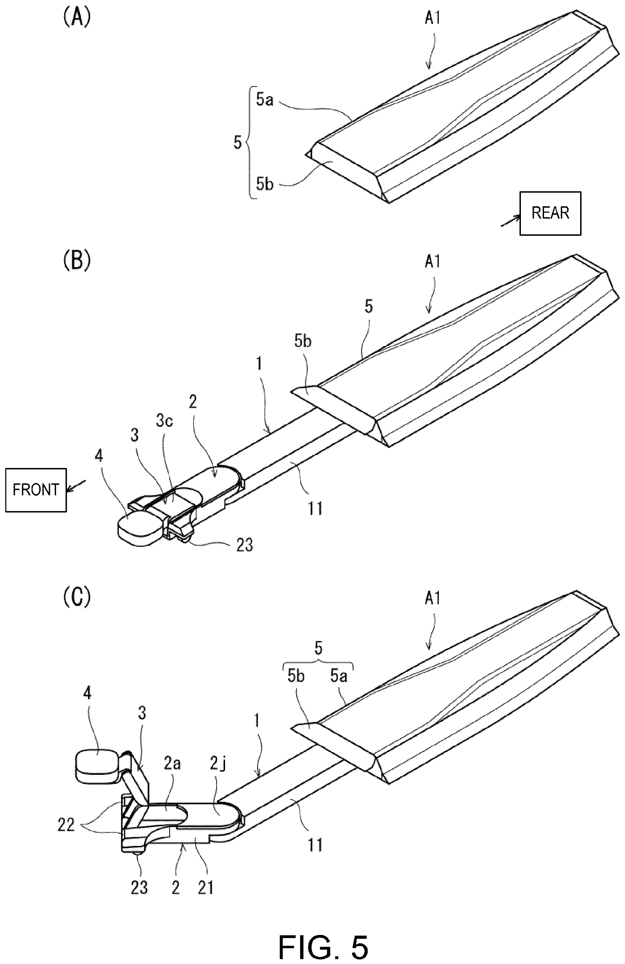

The lifting device 3 raises and lowers the power supplying part 4. A base-end part of the lifting device 3 (a base part 35 in Fig. 3) is attached to the tip-end part of the swinging member 21, and a power-supplying-part attaching part 38 in a plate shape, to which the power supplying part 4 is attached, is provided to a tip-end part of the lifting device 3. The lifting device 3 is capable of moving (raising and lowering) the power-supplying-part attaching part 38 in the vertical direction as indicated by an arrow b3 while maintaining the posture of the power-supplying-part attaching part 38. Note that a recess 2a is provided in the tip-end side area of the swinging member 21 (see Fig. 5(C)) to accommodate a lifting mechanism part 3L of the lifting device 3 when the power supplying part 4 is lowered to the lowest position as illustrated by a two-dot chain line in Fig. 2(B) (see also Fig. 5(B)).

The linear-motion member 11 of the linear-motion device 1 described above can move in the front-and-rear direction within a given range between a reference position and a given forward position (foremost position). Figs. 2(A) and 2(B) illustrate the state in which the linear-motion member 11 advances to the foremost position.

When the power supplying part 4 is lowered to the lowest position and the lifting mechanism part 3L is accommodated in the recess 2a of the swinging member 21 as illustrated by the two-dot chain line in Fig. 2(B), and the longitudinal direction of the swinging member 21 (e.g., the direction of the swinging member 21 from the base end to the tip end) matches the front-and-rear direction (longitudinal direction) of the linear-motion member 11, and then the linear-motion member 11 is located at the rearmost position (reference position), the linear-motion member 11, the swinging member 21, the lifting mechanism part 3L, and the power supplying part 4 are accommodated inside the accommodating case 5 (the state illustrated in Fig. 5(A)). The position of the linear-motion member 11 at this time is the reference position of the linear-motion member 11. Moreover, the position of the swinging member 21 where its longitudinal direction matches the front-and-rear direction (longitudinal direction) of the linear-motion member 11 is a reference position of the swinging member 21. Moreover, the position of the lifting mechanism part 3L (e.g., the position of the power-supplying-part attaching part 38) where the power supplying part 4 is lowered to the lowest position is a reference position of the lifting mechanism part 3L.

Fig. 3 is a perspective view illustrating one example of a detailed configuration of the lifting device 3. Fig. 3 illustrates a state in which a cover 3c illustrated in Fig. 2 is removed, and the power supplying part 4 is not attached to the power-supplying-part attaching part 38.

The lifting device 3 includes the lifting mechanism part 3L and a third motor M3 which drives the lifting mechanism part 3L.

The lifting mechanism part 3L is attached at a base-end part to the tip-end part of the swinging member 21, attached at a tip-end part to the power supplying part 4, and is foldable. As described above, when the lifting mechanism part 3L is folded and the power supplying part 4 is lowered to the lowest position, the folded lifting mechanism part 3L is accommodated in the recess 2a of the swinging member 21.

Here, the lifting mechanism part 3L is comprised of parallel linkage mechanisms L1 to L4. Since structures of the parallel linkage mechanisms L1 and L2 are symmetrical to structures of the parallel linkage mechanisms L3 and L4, they are described while the same reference characters are given to corresponding components.

The base part 35 of the lifting mechanism part 3L is fixed to a tip-end part of a bottom surface of the recess 2a on the tip-end side of the swinging member 21. One ends of link members 31 and 32 of the parallel linkage mechanisms L1 and L3 are rotatably attached to link attaching parts 35a which are provided on the left and right sides of the base part 35, respectively. Here, the link members 31 of the two parallel linkage mechanisms L1 and L3 are coupled by a rotation shaft 41, the link members 32 of the two parallel linkage mechanisms L1 and L3 are coupled by a rotation shaft 42, and the rotation shafts 41 and 42 are rotatably supported by the link attaching parts 35a on the left and right sides.

The other ends of the link members 31 and 32 of the parallel linkage mechanism L1 are rotatably attached to a coupling part 36 in a substantially triangular shape. Then, one ends of link members 33 and 34 of the parallel linkage mechanism L2 are rotatably attached to the coupling part 36. Here, the other end of the link member 32 and the one end of the link member 34 are attached to the coupling part 36 so as to be overlapped with each other. Moreover, the link member 31 and the link member 33 are provided with interlocking parts 31a and 33a, respectively, so that the link member 31 and the link member 33 contact with each other and move in an interlocking manner. The configurations of the parallel linkage mechanisms L1 and L2 as described above are similarly applied to the parallel linkage mechanisms L3 and L4.

Then, the other ends of the link members 33 and 34 of the parallel linkage mechanisms L2 and L4 are rotatably attached to link attaching parts 37a provided on the left and right sides of a movable part 37 connected to the power-supplying-part attaching part 38. The movable part 37 is formed integrally with the power-supplying-part attaching part 38, and the movable part 37 and the power-supplying-part attaching part 38 are the member to which the power supplying part 4 is attached.

Moreover, the third motor M3 for driving the lifting mechanism part 3L is fixed to the bottom surface of the recess 2a. A pulley 45 is attached to a motor shaft of the third motor M3. This pulley 45 and a pulley 43 attached to the rotation shaft 41 are bridged therebetween by a belt 44, and the rotation of the third motor M3 is transmitted to the rotation shaft 41. Note that in Fig. 3 the third motor M3 and the related components, such as the belt 44, are schematically illustrated, and their actual shapes and sizes, etc., may be different.

By rotating the third motor M3 in the clockwise and counterclockwise directions, the rotation shaft 41 rotates in the clockwise and counterclockwise directions, and thus, the link members 31 can rotate as indicated by arrows b4 and b5. Then, the link members 32 also rotate accompanying with the rotation of the link members 31.

Here, when the link members 31 rotate in the arrow direction b4, the link members 33 are rotated in an arrow direction b6 by the interlocking parts 31a and 33a, and the link members 34 are accordingly rotated in the same direction, and thus, the movable part 37 and the power-supplying-part attaching part 38 are raised. On the other hand, when the link members 31 rotate in the arrow direction b5, the link members 33 are rotated in an arrow direction b7 by the interlocking parts 31a and 33a, and the link members 34 are accordingly rotated in the same direction, and thus, the movable part 37 and the power-supplying-part attaching part 38 are lowered. As described above, the link members 33 which rotate interlocking with the rotation of the link members 31, rotate in a direction opposite from the rotating direction of the link members 31 (rotate reversely).

The coupling part 36 is always located closer, compared to the one ends of the link members 31 and 32 attached to the link attaching part 35a and the other ends of the link members 33 and 34 attached to the link attaching part 37a, to the base end of the swinging member 21. Then, when the movable part 37 and the power-supplying-part attaching part 38 are lowered to the lowest position, the lifting mechanism part 3L is folded and accommodated inside the recess 2a of the swinging member 21 (the state illustrated in Fig. 5(B)). At this time, the power supplying part 4 and the power-supplying-part attaching part 38 are protruded from the tip end of the swinging member 21.

In the example of the lifting mechanism part 3L described above, each of the parallel linkage mechanisms L1 and L3 is a first parallel linkage mechanism. Here, the link member 31 constitutes a driving link which is driven by the third motor M3, and the link member 32 constitutes a driven link, but they may be reversed.

Moreover, each of the parallel linkage mechanisms L2 and L4 is a second parallel linkage mechanism, and the link member 33 constitutes a driving link which is driven by the rotation of the link member 31 while the link member 34 constitutes a driven link.

Next, Fig. 4 is a block diagram illustrating an outline configuration of the vehicle power supplying apparatus A and the vehicle B.

The vehicle power supplying apparatus A is provided with a power source part 6, a communication device 7, and a controller 8 in addition to the power supplying part 4 and the first to third motors M1 to M3 described above. The first to third motors M1 to M3 are stepping motors, for example. Moreover, the control box A2 illustrated in Fig. 1 accommodates the power source part 6, the communication device 7, and the controller 8, for example.

The power source part 6 is connected to an external power source, such as commercial power supply, and converts AC power supplied from the external power source into a given DC power based on a control by the controller 8 so as to supply it to the power supplying part 4. The communication device 7 performs short-range wireless communication with a communication device 53 of the vehicle B based on a standard such as Bluetooth®.

The controller 8 is, for example, comprised of a microcontroller, and includes a CPU and a memory. The controller 8 controls the entire vehicle power supplying apparatus A by the CPU executing a control program stored in the memory. Accordingly, the controller 8 controls the power source part 6, the communication device 7, and the first to third motors M1 to M3. Note that the controller 8 may be comprised of a sole controller which executes a centralized control, or a plurality of controllers which execute a distributed control by cooperating with each other.

The vehicle B is provided with a battery 51, the power receiving part 52, the communication device 53, and a vehicle controller (ECU) 54. The vehicle controller 54 includes a CPU and a memory, and executes controls of various components of the vehicle B. In Fig. 4, the vehicle controller 54 acquires a charged state of the battery 51 and controls the communication device 53. The power receiving part 52 supplies to the battery 51 the DC power supplied from the power supplying part 4 by being connected to the power supplying part 4. The power receiving part 52 and the power supplying part 4 may be configured as connectors connected to each other by one conductor being fitted into the other conductor. Moreover, the shape of the power supplying part 4 can be changed according to the shape of the power receiving part 52.

Note that although in this embodiment the DC power is supplied from the power supplying part 4 to the power receiving part 52, AC power may be supplied. In this case, the power source part 6 converts AC power supplied from the external power source into AC power to be supplied to the power receiving part 52, and supplies it to the power supplying part 4. Moreover, in this case, a rectifier for converting the AC power inputted from the power receiving part 52 into the DC power is provided to the vehicle B, and the DC power from the rectifier is supplied to the battery 51.

Moreover, although in this embodiment the power receiving part 52 and the power supplying part 4 are configured as the connectors which conduct power by contacting the respective conductors, the power supplying part 4 and the power receiving part 52 may be configured as coils, and the AC power may be transmitted from the power supplying part 4 to the power receiving part 52 without physical contact. In this case, the rectifier for converting the AC power supplied to the power receiving part 52 into the DC power is provided to the vehicle B, and the DC power from the rectifier is supplied to the battery 51.

Next, operation of the vehicle power supplying apparatus A is described. Figs. 5(A) to 5(C) are perspective views illustrating one example of the operation of the vehicle power supplying apparatus A.

When the vehicle power supplying apparatus A does not operate, as illustrated in Fig. 5(A), the linear-motion device 1, the swinging device 2, the lifting device 3, and the power supplying part 4 are accommodated inside the accommodating case 5.

Then, as illustrated in Fig. 1, when the vehicle B stops at the parking space Sp, and the vehicle power supplying apparatus A receives a power supply starting signal and positional information on the power receiving part 52 from the vehicle B, it starts the power supplying operation. In detail, the vehicle B is provided with a power supply starting switch, for example. When a driver of the vehicle B turns on the power supply starting switch, the vehicle controller 54 causes the communication device 53 to transmit the power supply starting signal to the communication device 7. Moreover, at this time, the positional information on the power receiving part 52 is also transmitted together with the power supply starting signal.

Then, when the controller 8 of the vehicle power supplying apparatus A receives the power supply starting signal via the communication device 7, it starts to supply power. At this time, the controller 8 first calculates a position (target position) of the power supplying part 4 at which the power supplying part 4 is connected to the power receiving part 52, based on the positional information on the power receiving part 52 received together with the power supply starting signal. Then, the controller 8 calculates an amount of movement for the power supplying part 4 to move from a given accommodated position (a given position inside the accommodating case 5) to the target position. For example, as the amount of movement, an advancing distance of the linear-motion member 11 from the reference position, a rotational angle of the swinging member 21 from the reference position, and a raising distance by the lifting mechanism part 3L from the reference position may be calculated.

Then, the controller 8 advances the linear-motion member 11 as illustrated in Fig. 5(B) by driving the first motor M1 based on the calculated advancing distance of the linear-motion member 11. When the linear-motion member 11 is advanced, the lid 5b of the accommodating case 5 opens by being pushed by the power supplying part 4, and then, the power supplying part 4 advances. Then, after the controller 8 rotates the swinging member 21 by driving the second motor M2 based on the calculated rotational angle of the swinging member 21, it raises the power supplying part 4 by driving the third motor M3 based on the calculated raising distance of the power supplying part 4, and connects the power supplying part 4 to the power receiving part 52 (Fig. 1) of the vehicle B (Fig. 5(C)).

Then, the controller 8 causes the power source part 6 to supply power to the power supplying part 4. This power is supplied from the power supplying part 4 to the battery 51 via the power receiving part 52. The vehicle controller 54 always monitors the charged state of the battery 51, and causes the communication device 53 to transmit a charging finish signal to the vehicle power supplying apparatus A when the battery 51 becomes a given charged state (e.g., a fully charged state).

When the controller 8 receives the charging finish signal via the communication device 7, it ends to supply power from the power source part 6 to the power supplying part 4. Then, the controller 8 controls the third motor M3, the second motor M2, and the first motor M1 to cause the lifting device 3, the swinging device 2, and the linear-motion device 1 to perform operations reverse to the operations described above, in this order, and accommodates the linear-motion device 1, the swinging device 2, the lifting device 3, and the power supplying part 4 back inside the accommodating case 5 as illustrated in Fig. 5(A). Note that the linear-motion member 11 and the swinging member 21 which go outside the accommodating case 5 are supported by the casters 23 so that a given gap is maintained from the ground.

Note that the vehicle controller 54 may acquire the positional information on the power receiving part 52 to be transmitted to the vehicle power supplying apparatus A as described below. For example, a plurality of (e.g., three) radio wave transmitters may be provided on the ground in or around the parking space Sp. The respective radio wave transmitters are disposed at given positions separate from each other, and always transmit radio waves different from each other. Then, the vehicle B is provided with a receiver near the power receiving part 52, which receives the radio waves transmitted from the respective radio wave transmitters. The vehicle controller 54 may store positional information on the radio wave transmitters with respect to the accommodated position of the power supplying part 4 in advance, receive the radio waves from the respective radio wave transmitters by the receiver, and calculate the positional information on the power receiving part 52 with respect to the accommodated position of the power supplying part 4 based on intensities of the radio waves received from the respective radio wave transmitters and the positional information on the respective radio wave transmitters.

Moreover, the positional information on the power receiving part 52 of the vehicle B may be calculated on the vehicle power supplying apparatus A side. For example, a camera which images the power receiving part 52 of the vehicle B may be installed in the vehicle power supplying apparatus A, the power receiving part 52 may be detected based on the image captured by the camera using an image recognition technique, and the positional information on the detected power receiving part 52 may be calculated.

Note that the method of calculating the positional information on the power receiving part 52 of the vehicle B is not limited to that described above. For example, a light emitting part which emits laser light may be provided near the power receiving part 52, a light receiving part which receives the laser light may be provided to the vehicle power supplying apparatus A, and the positional information on the power receiving part 52 with respect to the accommodated position of the power supplying part 4 may be calculated based on the laser light received by the light receiving part. Ultrasonic waves may be used instead of the laser light.

In this embodiment, the power supplying unit A1 is disposed below the vehicle B parked at the parking space Sp, and when connecting the power supplying part 4 to the power receiving part 52 of the vehicle B, the linear-motion member 11 is advanced, then, the swinging member 21 is swung so that the power supplying part 4 is located below the power receiving part 52, and the power supplying part 4 is raised by the lifting device 3 to be connected to the power receiving part 52. Therefore, the area where the power supplying unit A1 moves on the ground can be comparatively small, combining an area where the linear-motion member 11 and the swinging member 21 linearly move, and a small area where the swinging member 21 swings to the left or right. Therefore, the possibility of malfunction due to an object on the ground being an obstacle can be reduced. Moreover, since the length in the longitudinal direction of the swinging member 21 may be shorter than that of the linear-motion member 11, and its weight can also be small, energy required for swinging the swinging member 21 can be small, and thus, a reduction in the energy consumption can also be expected.

Moreover, in this embodiment, the lifting mechanism part 3L is accommodated in the accommodating case 5 by being folded and accommodated in the recess 2a of the swinging member 21. Therefore, the apparatus can be reduced in size.

It is apparent for a person skilled in the art from the above description that many improvements and other embodiments of the present disclosure are possible. Therefore, the above description is to be interpreted only as illustration, and it is provided in order to teach a person skilled in the art the best mode to implement the present disclosure. The details of the structures and/or the functions may be substantially changed, without departing from the spirit of the present disclosure.

### INDUSTRIAL APPLICABILITY

The present disclosure is useful as a vehicle power supplying apparatus, capable of reducing a possibility of malfunction due to an object on the ground being an obstacle.

### DESCRIPTION OF REFERENCE CHARACTERS

- A: Vehicle Power Supplying Apparatus
- B: Vehicle
- L1-L4: Parallel Linkage Mechanism
- 1: Linear-Motion Device
- 2: Swinging Device
- 3: Lifting Device
- 3L: Lifting Mechanism Part
- 4: Power Supplying Part
- 5: Accommodating Case
- 8: Controller
- 11: Linear-Motion Member
- 21: Swinging Member
- 2a: Recess
- 31-34: Link Member
- 36: Coupling Part
- 52: Power Receiving Part

## Claims

1. A vehicle power supplying apparatus, comprising:
a linear-motion device including a linear-motion member elongated in a front-and-rear direction and configured to linearly move the linear-motion member in the front-and-rear direction within a given range between a reference position and a given forward position;
a swinging device including a swinging member attached at a base-end part to a front-end part of the linear-motion member so as to be swingable in a left-and-right direction, and configured to swing the swinging member in the left-and-right direction;
a lifting device attached to a tip-end part of the swinging member and configured to raise and lower a power supplying part configured to supply power to a power receiving part attached to a lower surface of a vehicle by being connected to the power receiving part; and
a controller configured to control the linear-motion device, the swinging device, and the lifting device based on positional information on the power receiving part so as to connect the power supplying part to the power receiving part.

2. The vehicle power supplying apparatus of claim 1, wherein the lifting device includes a foldable lifting mechanism part attached at a base-end part to the tip-end part of the swinging member and attached at a tip-end part to the power supplying part, and
wherein the swinging device includes a recess in a tip-end side area of the swinging member, the recess accommodating the lifting mechanism part when the lifting mechanism part is folded,
the vehicle power supplying apparatus further comprising:
an accommodating case in which the linear-motion member, the swinging member, the lifting mechanism part, and the power supplying part are accommodated, when the lifting mechanism part is folded and accommodated in the recess, a longitudinal direction of the swinging member matches the front-and-rear direction of the linear-motion member, and the linear-motion member is at the reference position.

3. The vehicle power supplying apparatus of claim 2, wherein the lifting mechanism part includes:
first parallel linkage mechanisms each having a first link member constituting a driving link rotatably supported at one end by the tip-end part of the swinging member, and rotatably attached at the other end to a coupling part, and a second link member constituting a driven link; and
second parallel linkage mechanisms each having a third link member constituting a driving link rotatably attached at one end to the coupling part, and rotatably attached at the other end to a member to which the power supplying part is attached, and a fourth link member constituting a driven link, and
wherein the coupling part is always located closer, compared to the one ends of the first and second link members and the other ends of the third and fourth link members, to a base end of the swinging member, and the third link member rotates interlocking with a rotation of the first link member or the second link member so as to rotate in the opposite direction from the rotation of the first link member or the second link member.
